# EUROPEAN PATENT APPLICATION

(11) **EP 3 636 596 A1**
(43) Date of publication of application: **15.04.2020**
(21) Application number: 18814418.2
(22) Date of filing: 01.06.2018
(51) Int. Cl.: C01B 39/36, B01J 29/40, C01B 39/04, B01J 29/70, B01J 29/06, C10G 45/64

(54) **SYNTHESIS OF NANOCRYSTALLINE MFI ZEOLITE, SYNTHESIS METHOD AND USE THEREOF IN CATALYTIC APPLICATIONS**

(30) Priority: 05.06.2017 ES 201730770
(71) Applicant: Universitat Politècnica de València, 46022 Valencia (ES); Consejo Superior de Investigaciones Científicas (CSIC), 28006 Madrid (ES)
(72) Inventor: GALLEGO S NCHEZ, Eva Mar a, 46022 Valencia (ES); PARIS CARRIZO, Cecilia Gertrudis, 46022 Valencia (ES); MART NEZ TRIGUERO, Luis-Joaqu n, 46022 Valencia (ES); MOLINER MAR N, Manuel, 46022 Valencia (ES); CORMA CANOS, Avelino, 46022 Valencia (ES)
(74) Representative: Pons
(86) International application number: PCT/ES2018/070399
(87) International publication number: WO 2018/224711

(57) **Abstract**

The present invention relates to a new process for synthesising a crystalline material comprising the zeolite MFI structure in nanocrystalline form, and which can comprise at least the following steps: i) preparing a mixture comprising at least one source of water, at least one source of a tetravalent element Y, at least one source of a trivalent element X, at least one source of an alkali cation or alkaline earth metal cation (A), and at least one organic molecule (OSDA1), wherein OSDA1 is preferably a monocyclic quaternary ammonium with the structure R₁R₂CycloN⁺, the molar composition of the mixture being: *n* X₂O₃ : YO₂: a A : *m* OSDA1 : *z* H₂O; ii) crystallising this mixture in a reactor; and iii) recovering the crystalline material obtained.

## Description

The present invention relates to a new method for synthesising zeolite comprising crystalline MFI structure in nanocrystalline form, and to the use as a catalyst of the synthesised zeolite material according to the present synthesis method.

### BACKGROUND OF THE INVENTION

The synthesis of zeolite with MFI structure was described for the first time in aluminosilicate form using the organic molecule tetrapropylammonium (TPA) as an organic structure-directing agent (OSDA) (Argauer et al., US Patent 3702886, 1972). The MFI structure has two systems of interconnected channels, bound by 10-atoms, and the pore opening of which is ∼ 5-5.5 Å (Kokotailo et al., Nature, 1978, 272, 437).

The use of the TPA cation as an OSDA also allows the MFI zeolite to be prepared with other chemical compositions, such as for example in the form of gallosilicate (Lalik et al., J. Phys. Chem., 1992, 96, 805), borosilicate (Coudurier et al., J. Catal., 1987, 108, 1), titanosilicate (*Taramasso et al., O.S. Patent* 4410501, 1983), or tinsilicate (Mal et al., J. Chem. Soc., Chem. Commun., 1994, 1933), among others. The possibility of preparing the MFI zeolite structure with various compositions confers it with interesting catalytic properties in a large number of chemical processes, including both petrochemical and fine chemical processes (Tabak et al., Catal. Today, 1990, 6, 307*;* Notari, Catal. Today, 1993, 18, 163).

The synthesis of zeolites in nanocrystalline form, i.e. with very small crystal sizes (< 100 nm), has been the subject of great attention in recent years, given that materials of this type allow the efficiency of catalytic processes requiring the presence of bulky products and/or reagents to be improved, considerably favouring the diffusion thereof through the crystals, and minimising deactivation processes (Zheng et al. J. Mater. Chem. A, 2016, 4, 16756). Nevertheless, the preparation of a certain zeolite in nanocrystalline form in an efficient and general manner, i.e. with wide chemical composition ranges, good synthesis yields (>80 %), and with homogeneous particle sizes with an average particle size less than 50 nm, is a complicated task.

The synthesis of the structure MFI in nanocrystalline form has been studied using TPA as OSDA (Micropor. Mesopor. Mater., 2000, 39, 135). The final particle size, chemical composition and synthesis yield of MFI zeolite in nanocrystalline form are clearly influenced by the source of aluminium used, the synthesis pH, dilution of the medium, or the presence of alkali cations, among other factors.

Other synthesis methodologies have been described in the literature using TPA as OSDA, including synthesis confined within ordered supports (Madsen et al., Chem. Commun., 1999, 673), using microwave radiation (Hu et al., Micropor. Mesopor. Mater., 2009, 119, 306), using alcoholic media (Persson et al., Zeolites, 1994, 14, 557; Majano et al., Adv. Mater., 2006, 18, 2440), or introducing surfactants or polymers in the synthesis medium (Zhu et al., J. Colloid Interface Sci., 2009, 331, 432*;* Xin et al., Chem. Commun., 2009, 7590), among others. Unfortunately, all these synthesis methodologies introduce significant economic limitations for preparing MFI material in nanocrystalline form on an industrial scale.

The use of bulky dicationic organic molecules as efficient OSDAs for synthesising MFI structure with very small particle sizes, with good synthesis yields and wide ranges of chemical composition has been described. For example, Ryoo et al. have used dicationic OSDAs with long aliphatic chains (>C16), such as C₂₂H₄₅-N⁺(CH₃)₂-C₆H₁₂-N⁺(CH₃)₂-C₆H₁₃ (Choi et al., Nature 2009, 461, 246*;* Kim et al., Chem. Mater. 2017, 29, 1752). Other authors have used similar bulky molecules with long aliphatic chains (>C₁₆) capable of autoassembly and acting as bulky dimers for directing the formation of the MFI structure with very small particle sizes (Xu et al., Nat. Commun., 2014, 5(4262):1). Moreover, Burton also uses bulky dicationic OSDAs derived from of alkylpyrrolidines for the synthesis of nanocrystalline MFI structure (Burton, WO2014/099261, 2014). These synthesis methods with bulky OSDAs require the use of long aliphatic chains and/or of the use of different synthesis steps, which may increase the cost of preparing the OSDA to synthesise the MFI zeolite in nanocrystalline form.

Recently, Tsapatsis et al. have synthesised the crystalline MFI structure in nanocrystalline form using the cation tetrabutylphosphonium as an OSDA (Ren et al., Angew. Chem. Int. Ed. 2015, 54, 10848). Unfortunately, this method requires the use of OSDAs derived from phosphines, which has a few important drawbacks. On the one hand, organic molecules derived from phosphine exhibit serious environmental and health problems inevitably associated with their use. Moreover, the complete removal of phosphorous-containing species trapped inside zeolite cavities is very complicated, particularly in small-pore zeolites, and the process of removing them requires calcination steps at very high temperatures and hydrogen atmospheres for the complete decomposition/removal of said species.

Therefore, there is a need in the chemical industry to find simpler organic molecules, such as monocationic OSDAs that are not based on phosphine derivatives, and are capable of directing the formation of the MFI structure in nanocrystalline form with crystal sizes smaller than 50 nm, with wide ranges of chemical composition and good synthesis yields (>90 %).

Despite the breakthroughs shown in the synthesis of MFI structure in nanocrystalline form, there is a clear need in the chemical industry to improve the synthesis thereof to subsequently apply it in various catalytic processes, and more particularly for use as a catalyst in methanol-to-propene processes, dealkylation-transalkylation of alkylaromatics and catalytic cracking and hydrocracking, among others.

### DESCRIPTION OF THE INVENTION

The present invention relates to a new method for synthesising zeolite with MFI structure in nanocrystalline form, using a monocationic OSDA not derived from phosphines in order to obtain high synthesis yields (> 80 %) and an average crystal size smaller than 50 nm. The present invention also relates to the subsequent use of said synthesised material as a catalyst in various catalytic processes, preferably as a catalyst in the methanol-to-olefins (MTO) process.

In a first aspect, the present invention relates to a new synthesis method for synthesising a crystalline material comprising the zeolite MFI structure in nanocrystalline form and which can comprise at least the following steps:
i) preparing a mixture comprising at least one source of water, at least one source of a tetravalent element Y, at least one source of a trivalent element X, at least one source of an alkali cation or alkaline earth metal cation (A), and at least one organic molecule (OSDA1) with the structure R₁R₂CycloN⁺,
   wherein OSDA1 is a monocyclic quaternary ammonium with the structure R₁R₂CycloN⁺, wherein the Cyclo group may comprise 3-7 carbon atoms, and groups R₁ and R₂ can be linear alkyl chains comprised of 1-4 and 3-6 carbon atoms, respectively, the molar composition of the mixture being:

   *n* X₂O₃: YO₂: a A : *m* OSDA1 : *z* H₂O

   wherein
   *n* is comprised in the range of 0 to 0.5, preferably 0.003 to 0.1; and more preferably 0.005 to 0.05;
   *a* is comprised in the range of 0 to 2, preferably 0 to 1; and more preferably 0 to 0.8;
   *m* is comprised in the range of 0.01 to 2, preferably 0.1 to 1; and more preferably 0.1 to 0.6; and
   *z* is comprised in the range of 1 to 200, preferably 1 to 50, and more preferably 2 to 20;
ii) crystallising the mixture obtained in i) in a reactor; and
iii) recovering the crystalline material obtained in ii).

In the present invention, the term "Cyclo" refers to a linear alkyl chain of 4-7 carbon atoms, optionally substituted with an alkyl of 1 to 3 carbon atoms, preferably a methyl, the terminal carbons of which bind to N of the corresponding quaternary ammonium, such that said linear alkyl chain together with the N atom form a heterocycle.

According to a particular embodiment, the tetravalent element Y can be selected from silicon, tin, titanium, zirconium, germanium, and combinations thereof. Preferably, the source of element Y is a source of silicon which can be selected from, silicon oxide, silicon halide, colloidal silica, fumed silica, tetraalkyl orthosilicate, silicate, silicic acid, a previously-synthesised crystalline material, a previously-synthesised amorphous material and combinations thereof.

According to a particular embodiment, the source of silicon can be selected from a previously-synthesised crystalline material, a previously-synthesised amorphous material and combinations thereof and furthermore optionally contains other heteroatoms in its structure. Some examples could be faujasite-type (FAU) zeolites, type L (LTL) and ordered amorphous mesoporous materials, such as MCM-41. These previously-synthesised materials may further contain other heteroatoms in the structure thereof, such as aluminium, for example.

According to a preferred embodiment, the trivalent element X can be selected from aluminium, boron, iron, indium, gallium and combinations thereof; preferably aluminium, boron and combinations thereof; and more preferably aluminium.

According to a particular embodiment, the trivalent element X is aluminium. Said source of aluminium can be selected from at least any aluminium salt (for example aluminium nitrate), or any hydrated aluminium oxide.

According to a particular embodiment of the present invention, the OSDA1 can be selected from alkyl-azetidiniums, alkyl-pyrrolidiniums, alkyl-piperidiniums, and combinations thereof. Preferably said OSDA1 can be selected from *N*-propyl-*N-*methylazetidinium, *N*-butyl-*N*-methylazetidinium, *N*-pentyl-*N*-methylazetidinium, *N-*propyl-*N*-methylpyrrolidinium, *N*-butyl-*N*-methylpyrrolidinium, *N*-pentyl-*N-*methylpyrrolidinium, *N*-butyl-*N*-ethylpyrrolidinium, *N*,*N*-dibutyl-pyrrolidinium, and combinations thereof. Preferably, said OSDA1 is *N*-butyl-*N*-methylpyrrolidinium.

According to the present invention, the crystallisation process described in ii) can preferably be carried out in autoclaves, under static or dynamic conditions at a temperature selected from 80 and 200 °C, preferably between 120 and 175 °C, and more preferably between 130 and 175 °C, and a crystallisation time which may be comprised between 6 hours and 50 days, preferably between 1 and 14 days, and more preferably between 2 and 10 days. It must be taken into account that the components of the synthesis mixture can come from different sources, which may vary the described crystallisation conditions.

According to a particular embodiment of the method of the present invention, is it is possible to add MFI crystals to the synthesis mixture, acting as seeds favouring the described synthesis, in an amount of up to 25 % by weight with respect to the total amount of the oxides corresponding to the sources of X and Y introduced in the medium in step i). These crystals can be added before or during the crystallisation process.

According to the described method, after the crystallisation described in ii), the resulting solid is separated from the mother liquor and recovered. The recovery step iii) can be carried out using different known separation techniques such as, for example, decantation, filtration, ultrafiltration, centrifugation, or any other solid-liquid separation technique and combinations thereof.

The method of the present invention may further comprise the removal of the organic content trapped within the material by means of any known removal/extraction technique.

According to a particular embodiment, the removal of the compound organic trapped within the material can be carried out by means of heat treatment at temperatures greater than 25 °C, preferably between 100 and 1000 °C and for a time period preferably comprised between 2 minutes and 25 hours.

According to another particular embodiment, the material produced according to the present invention can be pelletised using any known technique.

According to a preferred embodiment, any cation present in the material can be exchanged by means of ion exchange with other cations using conventional techniques. Therefore, depending on the X₂O₃/YO₂ molar ratio of the synthesised material, any cation present in the material can be exchanged, at least in part, by means of ion exchange. Said cations can preferably be selected from metals, protons, proton precursors and mixtures of same; and more preferably the exchange cation is a metal selected from rare-earth metals, metals from groups IIA, IIIA, IVA, VA, IB, IIB, IIIB, IVB, VB, VIB, VIIB, VIII and combinations thereof.

Another aspect of the invention relates to a zeolite material with MFI structure obtained according to the method described above and characterised in that it has the following molar composition:

*o* X₂O₃ : YO₂: *p* A : *q* OSDA1 : *r* H₂O

wherein
X is a trivalent element;
Y is a tetravalent element;
A is an alkali cation or alkaline earth metal cation;
*o* is comprised in the range of 0 to 0.5, preferably 0.003 to 0.1; and more preferably 0.005 to 0.05;
*p* is comprised in the range of 0 to 2, preferably 0 to 1; and more preferably 0 to 0.8;
*q* is comprised in the range of 0.01 to 2, preferably 0.1 to 1 and more preferably 0.1 to 0.6;
*r* is comprised in the range of 0 to 2, preferably 0 to 1.5; and more preferably 0 to 1;.

According to a preferred embodiment, the material obtained according to the present invention can be calcined. Thus, the zeolite material with MFI structure can have the following molar composition after being calcined:

*o* X₂O₃: YO₂: *p* A

wherein
X is a trivalent element;
Y is a tetravalent element;
A is an alkali cation or alkaline earth metal cation;
*o* is comprised in the range between 0 and 0.5, preferably 0.003 to 0.1; and more preferably 0.005 to 0.05;
*p* is comprised in the range of 0 to 2, preferably 0 to 1; and more preferably 0 to 0.8.

As discussed above, in the aforementioned method, any cation present in the material can be exchanged by means of ion exchange with other cations using conventional techniques. Therefore, depending on the X₂O₃/YO₂ molar ratio of the synthesised material, any cation present in the material can be exchanged, at least in part, by means of ion exchange. These exchange cations are preferably selected from metals, protons, proton precursors (such as ammonium ions for example) and mixtures of same, more preferably said cation is a metal selected from rare-earth metals, metals from groups IIA, IIIA, IVA, VA, IB, IIB, IIIB, IVB, VB, VIB, VIIB, VIII and combinations thereof, and heat-treated after that.

The crystalline material of the present invention can also be intimately combined with hydrogenating-dehydrogenating components such as, for example, platinum, palladium, nickel, rhenium, cobalt, tungsten, molybdenum, vanadium, chromium, manganese, iron and combinations thereof. The introduction of these elements can be carried out in crystallisation step ii), by exchange (where appropriate), and/or impregnation or physical mixing. These elements can be introduced in cationic form and/or from salts or other compounds which generate the oxide or metallic component in suitable catalytic form by decomposition.

In the described zeolite material with MFI structure, the tetravalent element Y can be selected from silicon, tin, titanium, zirconium, germanium, and combinations thereof, preferably silicon, and the trivalent element X can be selected from aluminium, boron, iron, indium, gallium and combinations thereof, preferably aluminium and boron, and more preferably aluminium.

A third aspect of the invention relates to the use of the aforementioned materials and obtained according to the method of the present invention as catalysts for the conversion of feeds formed by organic compounds into products with a higher added value, or as a molecular sieve for the removal/separation of reactive streams (for example mixtures of gases) by contacting the feeds with the obtained material.

According to a preferred embodiment, the material obtained according to the present invention can be used in the production of olefins after contacting it with an oxygenated organic compound under certain reaction conditions. In particular, by contacting with methanol, the obtained olefins are mostly ethylene and propylene. The ethylene and propylene can be polymerised to form polymers and co-polymers, such as polyethylene and polypropylene.

According to a preferred embodiment, the material obtained according to the present invention can be used as a catalyst in aromatic alkylation processes, wherein the alkylatable aromatic compound can be selected from benzene, biphenyl, naphthalene, anthracene, phenanthrene, thiophene, benzothiophene, substituted derivatives of same and combinations thereof, and the alkylating agent is selected from olefins, alcohols, polyalkylated aromatic compounds and combinations thereof. The obtained material, which may or may not contain hydrogenating-dehydrogenating components, can be used in processes for the dealkylation of alkylaromatics, transalkylation of alkylaromatics, isomerisation of alkylaromatics, or in combined processes for the dealkylation and transalkylation of alkylaromatics.

According to a preferred embodiment, the material obtained according to the present invention can be used as a catalyst in processes for the oligomerisation of light olefins, such as, for example, propene, butene, or pentene, for the production of synthetic liquid fuels in the gasoline or diesel range.

According to a preferred embodiment, the material obtained according to the present invention can be used as a catalyst in processes for the catalytic cracking of hydrocarbon fractions to increase the production of olefins.

Throughout the description and the claims, the word "comprises" and its variants do not intend to exclude other technical features, additives, components or steps. For those skilled in the art, other objects, advantages and features of the invention may be inferred from both the description and the embodiment of the invention.

### BRIEF DESCRIPTION OF THE FIGURES

**FIG. 1****:** Diffraction patterns of the materials obtained according to Examples 3-11 of the present invention.
**FIG. 2****:** SEM images of the materials obtained according to Examples 3, 4 and 10 of the present invention.
**FIG. 3****:** TEM image of the material obtained according to Example 3 of the present invention.
**FIG. 4****:** Methanol conversion values at 450 °C and WHSV=10 h⁻¹, obtained using as catalysts the synthesised materials according to Examples 3 and 9 of the present invention.

The present invention is illustrated by means of the following examples not intended to be limiting thereof.

### EXAMPLES

The invention is illustrated below by means of tests conducted by the inventors that demonstrate the effectiveness of the product of the invention.

### Example 1: Synthesis of 1-butyl-1-methylpyrrolidinium (1B1M)

15 g of 1-butylpyrrolidine (0.118 moles) and 200 ml of chloroform are added to a glass flask. The flask is placed in an ice bath (0 °C) and is left to cool, maintaining constant stirring. After that, 33.47 g of iodomethane (0.236 moles) are gradually added. Once the system reaches room temperature, it is left to react for 72 h. Once the reaction has ended the solvent is evaporated, a mixture of ethanol-ethyl acetate is added to crystallise the product. The formed crystals of 1-butyl-1-methylpyrrolidinium iodide are separated by filtration, obtaining 27.6 g (0.1025 moles) of product.

To prepare the hydroxide form of the preceding organic salt: 15 g of the organic salt are dissolved in 75 g of water. Next, 38 g of an anionic exchange resin (Dower SBR) are added, and the resulting mixture is kept under stirring for 24 hours. Lastly, the solution is filtered and 1-butyl-1-methylpyrrolidinium hydroxide is obtained (with an exchange percentage of 95 %).

### Example 2: Synthesis of triethylbutylammonium (TEBA).

20.24 g (0.20 moles) of ethylisobutylamine are dissolved in 200 ml of chloroform. The solution is transferred to a two-necked flask connected to cooling. The mixture is cooled in an ice bath. Anhydrous K₂CO₃ (13.82 g; 0.10 moles) is added and left to react for one hour under constant stirring. Iodoethane (93.58 g; 0.60 moles) is slowly added by means of a pressure compensated funnel. After that it is heated at 50 °C and left to react for 24 h. After cooling at room temperature, a new iodoethane aliquot (31 g, 0.20 moles) is added and it is left to react another 48 h. After the reaction time has lapsed, the solvent is evaporated and the obtained residue is dissolved in dichloromethane. The crude product is filtered to separate the inorganic salts, setting aside the supernatant. Lastly, the solvent is evaporated and the product is crystallised by adding ethyl acetate.

To prepare the hydroxide form of the preceding organic salt: 15 g of the organic salt are dissolved in 75 g of water. Next, 38 g of an anionic exchange resin (Dower SBR) are added, and the resulting mixture is kept under stirring for 24 hours. Lastly, the solution is filtered and triethylbutylammonium hydroxide is obtained (with an exchange percentage of 95 %).

### Example 3: Synthesis of nanocrystalline silicoaluminate with MFI structure

23.9 g of an aqueous solution at 6.7 % by weight of 1B1M hydroxide (obtained according to Example 1 of the present invention) are mixed with 0.065 g of alumina [Al(OH)₃, Sigma-Aldrich]. The mixture is kept under stirring for 20 minutes. Next, 3.7 g of an aqueous solution of colloidal silica at 40 % by weight (Ludox HS-40, Sigma-Aldrich) are added, and the mixture is kept under stirring until the desired concentration is achieved. The final composition of the gel is SiO₂ / 0.0167 Al₂O₃ / 0.4 1B1M / 10 H₂O. This gel is transferred to a Teflon-lined steel autoclave and heated at 150 °C for 14 days under static conditions. After this time has lapsed, the obtained product is recovered by filtration, washed with abundant water, and dried at 100 °C. The obtained solid is calcined in air at 550 °C for 5 hours. The obtained solid yield is greater than 90 %.

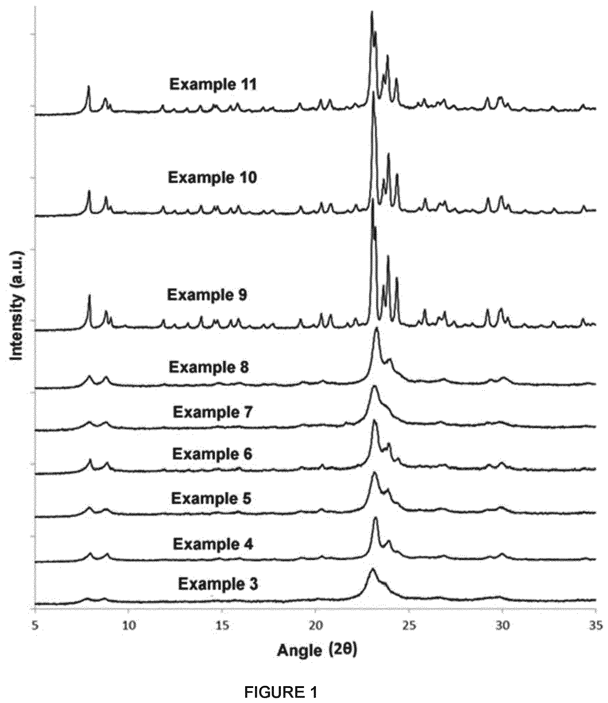

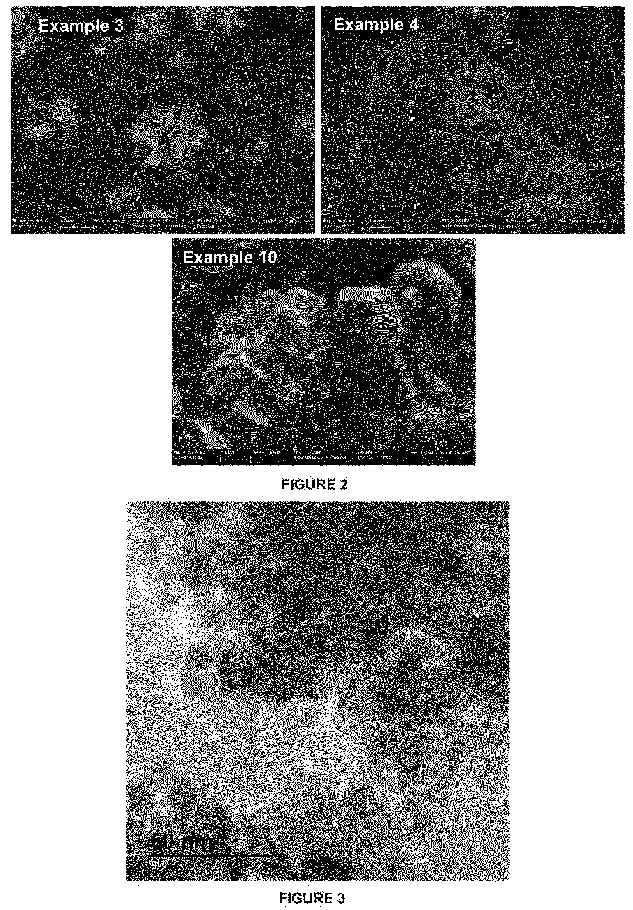

It is confirmed by X-ray diffraction that the obtained solid has the characteristic peaks of the MFI structure (see Example 3 in Figure 1). The chemical composition of the final sample has a Si/AI ratio of 33.2. The average crystal size is 10-15 nm (see SEM and TEM images in Figures 2 and 3). The textural properties of the synthesised material according to Example 3 of the present invention have been calculated by N₂ adsorption/desorption, obtaining 514 m²/g, 320 m²/g, and 194 m²/g, for the total BET area, micropore area and external area, respectively.

### Example 4: Synthesis of nanocrystalline silicoaluminate with MFI structure

18.4 g of an aqueous solution at 6.7 % by weight of 1B1M hydroxide (obtained according to Example 1 of the present invention) are mixed with 0.01 g of alumina [Al(OH)₃, Sigma-Aldrich]. The mixture is kept under stirring for 20 minutes. Next, 1.64 g of an aqueous solution of colloidal silica at 40 % by weight (Ludox HS-40, Sigma-Aldrich) are added, and the mixture is kept under stirring until the desired concentration is achieved. The final composition of the gel is SiO₂ / 0.005 Al₂O₃ / 0.4 1B1M / 10 H₂O. This gel is transferred to a Teflon-lined steel autoclave and heated at 150 °C for 14 days under static conditions. After this time has lapsed, the obtained product is recovered by filtration, washed with abundant water, and dried at 100 °C. The obtained solid is calcined in air at 550 °C for 5 hours. The obtained solid yield is greater than 90 %.

It is confirmed by X-ray diffraction that the obtained solid has the characteristic peaks of the MFI structure (see Example 4 in Figure 1). The chemical composition of the final sample has a Si/AI ratio of 83.3. The average crystal size is -15-20 nm (see TEM image in Figure 2).

### Example 5: Synthesis of nanocrystalline silicoaluminate with MFI structure

1.37 g of an aqueous solution at 6.7 % by weight of 1B1M hydroxide (obtained according to Example 1) are mixed with 0.072 g of an aqueous solution at 20 % by weight of sodium hydroxide (NaOH, Sigma-Aldrich, 98 %) and 0.006 g of alumina [Al(OH)₃, Sigma-Aldrich]. The mixture is kept under stirring for 20 minutes. Next, 0.35 g of an aqueous solution of colloidal silica at 40 % by weight (Ludox HS-40, Sigma-Aldrich) are added, and the mixture is kept under stirring until the desired concentration is achieved. The final composition of the gel is SiO₂ / 0.0167 Al₂O₃ / 0.15 NaOH / 0.25 1B1M / 10 H₂O. This gel is transferred to a Teflon-lined steel autoclave and heated at 150 °C for 14 days under static conditions. After this time has lapsed, the obtained product is recovered by filtration, washed with abundant water, and dried at 100 °C. The obtained solid is calcined in air at 550 °C for 5 hours. The obtained solid yield is greater than 90 %.

It is confirmed by X-ray diffraction that the obtained solid has the characteristic peaks of the MFI structure (see Example 5 in Figure 1). The chemical composition of the final sample has a Si/AI ratio of 35.1. The average crystal size is 15-20 nm.

### Example 6: Synthesis of nanocrystalline silicoaluminate with MFI structure

1.37 g of an aqueous solution at 6.7 % by weight of 1B1M hydroxide (obtained according to Example 1) are mixed with 0.074 g of an aqueous solution at 20 % by weight of sodium hydroxide (NaOH, Sigma-Aldrich, 98 %) and 0.006 g of alumina [Al(OH)₃, Sigma-Aldrich]. The mixture is kept under stirring for 20 minutes. Next, 0.34 g of an aqueous solution of colloidal silica at 40 % by weight (Ludox HS-40, Sigma-Aldrich) are added, and the mixture is kept under stirring until the desired concentration is achieved. The final composition of the gel is SiO₂ / 0.0167 Al₂O₃ / 0.15 NaOH / 0.25 1B1M / 50 H₂O. This gel is transferred to a Teflon-lined steel autoclave and heated at 150 °C for 14 days under static conditions. After this time has lapsed, the obtained product is recovered by filtration, washed with abundant water, and dried at 100 °C. The obtained solid is calcined in air at 550 °C for 5 hours. The obtained solid yield is greater than 80 %.

It is confirmed by X-ray diffraction that the obtained solid has the characteristic peaks of the MFI structure (see Example 6 in Figure 1). The chemical composition of the final sample has a Si/AI ratio of 31. The average crystal size is 20-25 nm.

### Example 7: Synthesis of nanocrystalline silicoaluminate with MFI structure

1.38 g of an aqueous solution at 6.7 % by weight of 1B1M hydroxide (obtained according to Example 1) are mixed with 0.095 g of an aqueous solution at 20 % by weight of potassium hydroxide (KOH, Sigma-Aldrich, 98 %) and 0.012 g of alumina [Al(OH)₃, Sigma-Aldrich]. The mixture is kept under stirring for 20 minutes. Next, 0.35 g of an aqueous solution of colloidal silica at 40 % by weight (Ludox HS-40, Sigma-Aldrich) are added, and the mixture is kept under stirring until the desired concentration is achieved. The final composition of the gel is SiO₂ / 0.033 Al₂O₃ / 0.15 KOH / 0.25 1B1M / 10 H₂O. This gel is transferred to a Teflon-lined steel autoclave and heated at 150 °C for 14 days under static conditions. After this time has lapsed, the obtained product is recovered by filtration, washed with abundant water, and dried at 100 °C. The obtained solid is calcined in air at 550 °C for 5 hours. The obtained solid yield is greater than 80 %.

It is confirmed by X-ray diffraction that the obtained solid has the characteristic peaks of the MFI structure (see Example 7 in Figure 1). The chemical composition of the final sample has a Si/AI ratio of 19.2. The average crystal size is 20-25 nm.

### Example 8: Synthesis of nanocrystalline borosilicate with MFI structure

9.09 g of an aqueous solution at 6.7 % by weight of 1B1M hydroxide (obtained according to Example 1 of the present invention) are mixed with 0.43 g of an aqueous solution at 5 % of boric acid [H₃BO₃, Sigma-Aldrich]. The mixture is kept under stirring for 20 minutes. Next, 1.52 g of an aqueous solution of colloidal silica at 40 % by weight (Ludox HS-40, Sigma-Aldrich) are added, and the mixture is kept under stirring until the desired concentration is achieved. The final composition of the gel is SiO₂ / 0.0167 B₂O₃ / 0.4 1B1M / 10 H₂O. This gel is transferred to a Teflon-lined steel autoclave and heated at 150 °C for 14 days under static conditions. After this time has lapsed, the obtained product is recovered by filtration, washed with abundant water, and dried at 100 °C. The obtained solid is calcined in air at 550 °C for 5 hours. The obtained solid yield is greater than 85 %.

It is confirmed by X-ray diffraction that the obtained solid has the characteristic peaks of MFI structure. The chemical composition of the final sample has a Si/B ratio of 29.3. The average crystal size is -10-15 nm.

### Example 9: Synthesis of silicoaluminate with MFI structure using tetrapropylammonium as OSDA

13.02 g of an aqueous solution at 20 % by weight of the tetrapropylammonium hydroxide are mixed with 0.084 g of alumina [Al(OH)₃, Sigma-Aldrich]. The mixture is kept under stirring for 20 minutes. Next, 4.8 g of an aqueous solution of colloidal silica at 40 % by weight (Ludox HS-40, Sigma-Aldrich) are added, and the mixture is kept under stirring until the desired concentration is achieved. The final composition of the gel is SiO₂ / 0.0167 Al₂O₃ / 0.4 TPAOH / 10 H₂O. This gel is transferred to a Teflon-lined steel autoclave and heated at 150 °C for 14 days under static conditions. After this time has lapsed, the obtained product is recovered by filtration, washed with abundant water, and dried at 100 °C. The obtained solid is calcined in air at 550 °C for 5 hours. The obtained solid yield is ∼ 70 %.

It is confirmed by X-ray diffraction that the obtained solid has the characteristic peaks of the MFI structure (see Example 9 in Figure 1). The chemical composition of the final sample has a Si/AI ratio of 31.8. The average crystal size is 200 nm (see SEM image in Figure 2). The textural properties of the synthesised material according to Example 9 of the present invention have been calculated by N₂ adsorption/desorption, obtaining 360 m²/g, 349 m²/g, and 11 m²/g, for the total BET area, micropore area and external area, respectively. This example shows that the use of TPA as OSDA, results in crystallising the MFI zeolite with an average crystal size considerably larger than those obtained in Examples 3-7 of the present invention, as also demonstrated by the obtained lower values of BET and external area (compare with Example 3).

### Example 10: Synthesis of silicoaluminate with MFI structure using tetrapropylammonium as OSDA

13.02 g of an aqueous solution at 20 % by weight of the tetrapropylammonium hydroxide are mixed with 0.026 g of alumina [Al(OH)₃, Sigma-Aldrich]. The mixture is kept under stirring for 20 minutes. Next, 4.83 g of an aqueous solution of colloidal silica at 40 % by weight (Ludox HS-40, Sigma-Aldrich) are added, and the mixture is kept under stirring until the desired concentration is achieved. The final composition of the gel is SiO₂ / 0.005 Al₂O₃ / 0.4 TPAOH / 10 H₂O. This gel is transferred to a Teflon-lined steel autoclave and heated at 150 °C for 14 days under static conditions. After this time has lapsed, the obtained product is recovered by filtration, washed with abundant water, and dried at 100 °C. The obtained solid is calcined in air at 550 °C for 5 hours. The obtained solid yield is ∼ 50 %.

It is confirmed by X-ray diffraction that the obtained solid has the characteristic peaks of the MFI structure (see Example 10 in Figure 1). The chemical composition of the final sample has a Si/AI ratio of 91.3.

### Example 11: Synthesis using triethylbutylammonium (TEBA) as OSDA

2.01 g of an aqueous solution at 8.0 % by weight of TEBA hydroxide (obtained according to Example 2 of the present invention) are mixed with 0.006 g of alumina [Al(OH)₃, Sigma-Aldrich]. The mixture is kept under stirring for complete homogenisation for 20 minutes. 0.349 g of an aqueous solution of colloidal silica at 40 % by weight (Ludox HS-40 colloidal silica, Sigma-Aldrich) are added to the mixture, and the mixture is kept under stirring until the desired concentration is achieved. The final composition of the gel is SiO₂ / 0.0167 Al₂O₃ / 0.4 TEBA / 10 H₂O. This gel is transferred to a Teflon-lined steel autoclave and heated at 150 °C for 14 days under static conditions. After this time has lapsed, the obtained product is recovered by filtration, washed with abundant water, and dried at 100 °C. The obtained solid is calcined in air at 550 °C for 5 hours.

It is confirmed by X-ray diffraction that the obtained solid has the characteristic peaks of MFI structure (see Example 11 in Figure 1). The chemical composition of the final sample has a Si/AI ratio of 32.4. The average crystal size is -100 nm. This example shows that the absence of a cyclic group in the OSDA, together with the combination of linear alkyl groups of different sizes (in this case, a butyl and three ethyls), results in crystallising MFI with a significantly larger average crystal size.

### Example 12: Catalytic assay for the methanol to olefins reaction

The activity of the samples has been tested in the methanol-to-olefins transformation in an isothermal fixed-bed reactor under the following reaction conditions: WHSV= 10 h⁻¹, atmospheric pressure, reaction temperature = 450 °C, catalyst = 50 mg pelletised between 0.2 and 0.4 mm. The methanol is vaporised by bubbling with 20 ml min⁻¹ of nitrogen in a methanol tank at 23 °C. The catalyst is diluted in 1.95 g of inert silica (0.1-0.2 mm) and placed in a glass reactor 10 mm in diameter. The reaction temperature is constantly regulated by a type K thermocouple and a PID controller associated with a heating oven. The outlet of the reactor is controlled at 150 °C and the products are analysed in two gas chromatographs, first in a PONA 50m capillary column, with an internal diameter of 0.25 mm, to separate C1 to C12 hydrocarbons with a temperature program of 35 to 250 °C, and second in a PLOT-alumina 30 m column, with an internal diameter of 0.53 mm, with a temperature program of 50 to 180 °C to separate C2-C4 hydrocarbons and determine hydrogen transfer. The detectors used flame ionisation detectors. The conversion is defined as the sum of the yields by weight of hydrocarbons.

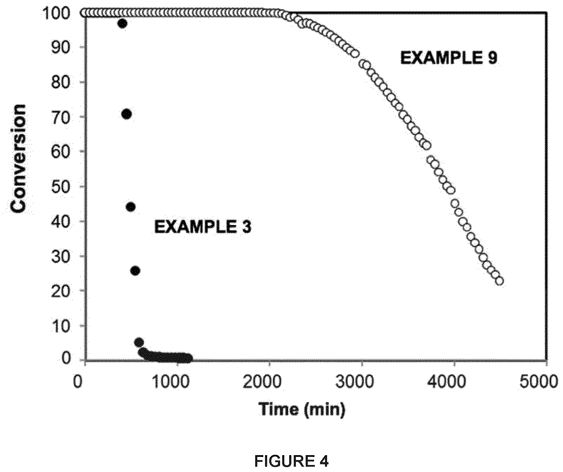

The catalytic results obtained for the catalysts obtained according to Examples 3 and 9 of the present invention are shown in Table 1. By comparing the results of the two materials presented in Table 1, it is concluded that the catalyst based on MFI zeolite obtained according to Example 3 is much more active than the catalyst based on MFI zeolite obtained according to Example 9, presenting a much slower deactivation (see Figure 4). The smaller crystal size of the catalyst obtained according to Example 3 explains this considerable increase in lifetime. Furthermore, it is shown that the reduction of the crystal size causes a higher yield into olefins with a lower production of undesired paraffins, ethylene and aromatics (see Table 1).

**Table 1: Yields into hydrocarbons in the methanol-to-olefins reaction at 450 °C and WHSV=10 h⁻¹ at a reaction time of 250 minutes**

| **Yields in %weight** | **Example 3** | **Example 9** |
|---|---|---|
| PARAFFINS | | |
| C1 | 0.68 | 2.07 |
| C2 | 0.11 | 0.27 |
| C3 | 2.33 | 5.21 |
| C4 | 3.90 | 8.12 |
| C5 | 2.29 | 3.53 |
| C6 | 2.17 | 2.27 |
| C7 | 1.58 | 1.12 |
| C8 | 0.55 | 0.48 |
| | | |

| OLEFINS | | |
|---|---|---|
| C2 | 8.41 | 13.80 |
| C3 | 38.49 | 26.88 |
| C4 | 24.27 | 15.99 |
| C5 | 6.43 | 4.01 |
| C6 | 0.96 | 0.60 |
| C7 | 0.31 | 0.26 |
| | | |

| AROMATICS | | |
|---|---|---|
| C6 | 0.23 | 0.57 |
| C7 | 1.17 | 3.33 |
| C8 | 2.45 | 7.99 |
| C9 | 1.94 | 2.11 |
| C10 | 0.28 | 0.26 |
| C11 | 0.05 | 0.06 |
| C12 | 0.01 | 0.09 |
| | | |

| NAPHTHENES | | |
|---|---|---|
| C5 | 0.32 | 0.28 |
| C6 | 0.56 | 0.41 |
| C7 | 0.40 | 0.24 |

| **Yields in %weight** | **Example 3** | **Example 9** |
|---|---|---|
| C8 | 0.08 | 0.06 |
| | | |
| TOTAL | | |
| OLEFINS | 78.88 | 61.53 |
| PARAFFINS | 13.61 | 23.07 |
| AROMA TICS | 6.14 | 14.41 |
| NAPHTHENES | 1.38 | 0.99 |

## Claims

1. A method for synthesising a zeolite material with MFI structure in nanocrystalline form, **characterised in that** it comprises at least the following steps:
i) preparing a mixture comprising at least one source of water, at least one source of a tetravalent element Y, at least one source of a trivalent element X, at least one source of an alkali cation or alkaline earth metal cation (A), and at least one organic molecule (OSDA1) with the structure R₁R₂CycloN⁺,
wherein OSDA1 is a quaternary ammonium of structure R₁R₂CycloN⁺, wherein the Cyclo group comprises 4-7 carbon atoms, group R₁ is a linear alkyl chain of 1 to 4 carbon atoms, group R₂ is a linear alkyl chain of 3 to 6 carbon atoms; and the molar composition of the mixture is:
*n* X₂O₃ : YO₂: a A : m OSDA1 : z H₂O
wherein
*n* is comprised in the range of 0 to 0.5;
a is comprised in the range of 0 to 2;
m is comprised in the range of 0.01 to 2;
z is comprised in the range of 1 to 200; and
ii) crystallising the mixture obtained in i) in a reactor; and
iii) recovering the crystalline material obtained in ii).

2. The method according to claim 1, **characterised in that** the tetravalent element Y is selected from silicon, tin, titanium, zirconium, germanium, and combinations thereof.

3. The method according to claim 2, **characterised in that** the source of the tetravalent element Y is a source of silicon which is selected from silicon oxide, silicon halide, colloidal silica, fumed silica, tetraalkyl orthosilicate, silicate, silicic acid, a previously-synthesised crystalline material, a previously-synthesised amorphous material and combinations thereof.

4. The method according to claim 3, **characterised in that** the source of silicon is selected from a previously-synthesised crystalline material, a previously-synthesised amorphous material and combinations thereof.

5. The method according to claim 4, **characterised in that** the previously-synthesised materials contain other heteroatoms in the structure thereof.

6. The method according to claim 1, **characterised in that** the trivalent element X is selected from aluminium, boron, iron, indium, gallium and combinations thereof.

7. The method according to claim 1, **characterised in that** the OSDA1 is selected from alkyl-azetidiniums, alkyl-pyrrolidiniums, alkyl-piperidiniums, and combinations thereof.

8. The method according to claim 7, **characterised in that** the OSDA1 is selected from *N*-propyl-*N*-methylazetidinium, *N*-butyl-*N*-methylazetidinium, *N*-pentyl-*N-*methylazetidinium, *N*-propyl-*N*-methylpyrrolidinium, *N*-butyl-*N*-methylpyrrolidinium, *N-*pentyl-*N*-methylpyrrolidinium, *N*-butyl-*N*-ethylpyrrolidinium, *N,N*-dibutyl-pyrrolidinium, and combinations thereof.

9. The method according to claim 8, **characterised in that** said OSDA1 is N-butyl-*N*-methylpyrrolidinium.

10. The method according to claims 1 to 9, **characterised in that** the crystallisation process described in ii) is carried out in autoclaves, under static or dynamic conditions.

11. The method according to the any of the preceding claims, **characterised in that** the crystallisation step described in ii) is carried out at a temperature of between 80 and 200 °C.

12. The method according to any of the preceding claims, **characterised in that** the crystallisation time of step ii) is comprised between 6 hours and 50 days.

13. The method according to any of the preceding claims, **characterised in that** it further comprises adding MFI crystals to the synthesis mixture in an amount of up to 25 % by weight with respect to the total amount of the sources of X and Y introduced in step i).

14. The method according to claim 13, **characterised in that** the MFI crystals are added before the crystallisation process or during the crystallisation process of step ii).

15. The method according to any of the preceding claims, **characterised in that** the recovery step iii) is carried out by means of a separation technique selected from decantation, filtration, ultrafiltration, centrifugation and combinations thereof.

16. The method according to any of the preceding claims, **characterised in that** it further comprises the removal of the organic content trapped within the material.

17. The method according to claim 16, **characterised in that** the process of removing the organic content isolated within the material is performed by heat treatment at temperatures between 100 and 1000 °C for a time period comprised between 2 minutes and 25 hours.

18. The method according to any of the preceding claims, **characterised in that** the obtained material is pelletised.

19. The method according to any of the preceding claims, **characterised in that** any cation present in the material is exchanged by means of ion exchange with other cations.

20. The method according to claim 19, **characterised in that** the exchange cation is selected from metals, protons, proton precursors, and mixtures of same.

21. The method according to claims 18 and 19, **characterised in that** the exchange cation is a metal selected from rare-earth metals, metals from groups IIA, IIIA, IVA, VA, IB, IIB, IIIB, IVB, VB, VIB, VIIB, VIII, and combinations thereof.

22. A zeolite material with MFI structure obtained by the method described in claims 1 to 21, **characterised in that** it has the following molar composition
*o* X₂O₃ : YO₂: *p* A : q OSDA1 : *r* H₂O
wherein
X is a trivalent element;
Y is a tetravalent element;
A is an alkali or alkaline earth element;
*o* is comprised in the range of 0 to 0.5;
*p* is comprised in the range of 0 to 2;
*q* is comprised in the range of 0.01 to 2; and
*r* is comprised in the range of 0 to 2.

23. The zeolite material with MFI structure according to claim 22, **characterised in that** it has the following molar composition after being calcined:
*o* X₂O₃: YO₂: *p* A
wherein
X is a trivalent element;
Y is a tetravalent element; and
A is an alkali or alkaline earth element;
*o* is comprised in the range between 0 and 0.5; and
*p* is comprised in the range of 0 to 2.

24. The zeolite material with MFI structure according to claims 22 and 23, **characterised in that** the tetravalent element Y is selected from silicon, tin, titanium, zirconium, germanium, and combinations thereof.

25. The zeolite material with MFI structure according to claims 22 and 23, **characterised in that** the trivalent element X is selected from aluminium, boron, iron, indium, gallium and combinations thereof.

26. A use of a zeolite material with MFI structure described in claims 22 to 25 and obtained by the method described in claims 1 to 21, in processes for the conversion of feeds formed by organic compounds into products with a higher added value, or for removal/separation from the reactive stream by contacting said feed with the described material.

27. The use of a zeolite material with MFI structure according to claim 26 for the production of olefins after contacting it with an oxygenated organic compound.

28. The use of a zeolite material with MFI structure according to claim 26 for the production of alkylated aromatic molecules after contacting it with an alkylatable aromatic molecule and an alkylating agent.

29. The use of a zeolite material with MFI structure according to claim 26 in processes for the dealkylation of alkylaromatics, transalkylation of alkylaromatics, isomerisation of alkylaromatics, or in combined processes for the dealkylation and transalkylation of alkylaromatics.

30. The use of a zeolite material with MFI structure according to claim 26 for the production of synthetic liquid fuels in the range of gasoline or diesel, after contacting said material with light olefins.

31. The use of a zeolite material with MFI structure according to claim 26 in processes for the catalytic cracking of hydrocarbons fractions to increase the production of olefins.
